# EUROPEAN PATENT SPECIFICATION

(11) **EP 2 617 090 B1**
(45) Date of publication and mention of the grant of the patent: **13.08.2014**
(21) Application number: 11770468.4
(22) Date of filing: 30.06.2011
(51) Int. Cl.: H01M 8/04, H01M 8/12

(54) **METHOD AND ARRANGEMENT FOR AVOIDING ANODE OXIDATION IN A HIGH TEMPERATURE FUEL CELL SYSTEM**
VERFAHREN UND ANORDNUNG ZUR VERMEIDUNG DER OXIDIERUNG VON ANODEN
PROCÉDÉ ET AGENCEMENT PERMETTANT D'EMPÊCHER L'OXYDATION DE L'ANODE DANS UN SYSTÈME DE PILES À COMBUSTIBLE

(30) Priority: 17.09.2010 FI 20105962
(43) Date of publication of application: 24.07.2013
(73) Proprietor: Convion Oy, 02150 Espoo (FI)
(72) Inventor: ÅSTRÖM, Kim, FI-02460 Kirkkonummi (FI); HAKALA, Tuomas, FI-00330 Helsinki (FI); HOTTINEN, Tero, FI-08680 Lohja (FI)
(74) Representative: LEITZINGER OY
(86) International application number: PCT/FI2011/050620
(87) International publication number: WO 2012/035195

(56) References cited:
- JP-A- 2009 021 014
- JP-A- 2009 170 307
- US-A- 6 093 500
- US-A1- 2002 177 022
- US-A1- 2007 065 688
- US-A1- 2007 277 960

## Description

### The field of the invention

Most of the energy of the world is produced by means of oil, coal, natural gas or nuclear power. All these production methods have their specific problems as far as, for example, availability and friendliness to environment are concerned. As far as the environment is concerned, especially oil and coal cause pollution when they are combusted. The problem with nuclear power is, at least, storage of used fuel.

Especially because of the environmental problems, new energy sources, more environmentally friendly and, for example, having a better efficiency than the above-mentioned energy sources, have been developed.

Fuel cell's, by means of which energy of fuel, for example biogas, is directly converted to electricity via a chemical reaction in an environmentally friendly process, are promising future energy conversion devices.

### The state of the art

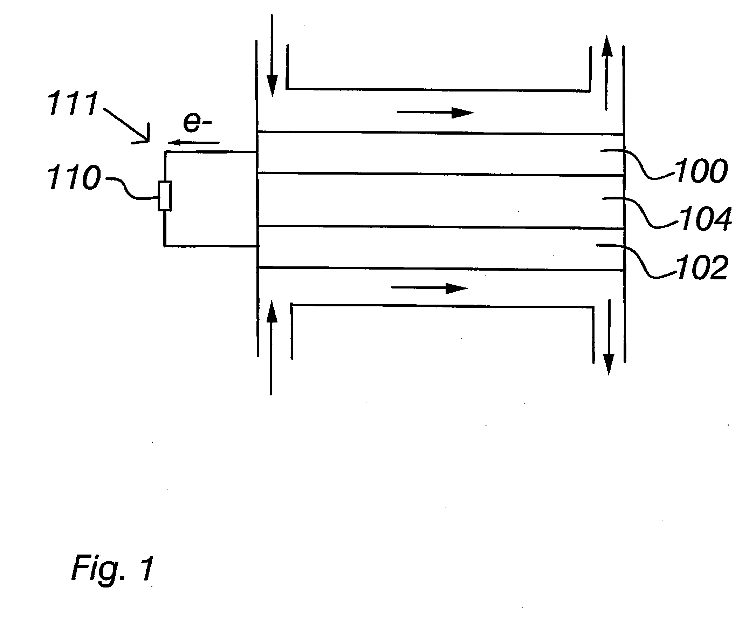

Fuel cell, as presented in fig 1, comprises an anode side 100 and a cathode side 102 and an electrolyte material 104 between them. In solid oxide fuel - cells (SOFCs) oxygen 106 is fed to the cathode side 102 and it is reduced to a negative oxygen ion by receiving electrons from the cathode. The negative oxygen ion goes through the electrolyte material 104 to the anode side 100 where it reacts with fuel 108 producing water and also typically carbon dioxide (CO2). Between anode 100 and cathode 102 is an external electric circuit 111 comprising a load 110 for the fuel cell.

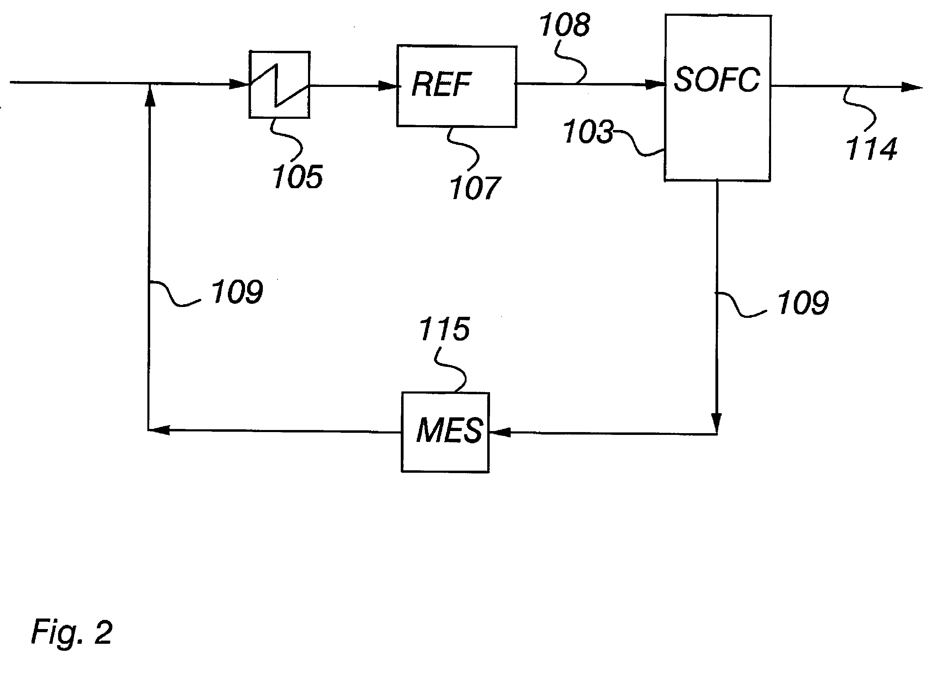

In figure 2 is presented a SOFC device as an example of a high temperature fuel cell device. SOFC device can utilize as fuel for example natural gas, blo gas, methanol or other compounds containing hydrocarbons. SOFC device in figure 2 comprises more than one, typically plural of fuel cells in stack formation 103 (SOFC stack). Each fuel cell comprises anode 100 and cathode 102 structure as presented In figure 1. Part of the used fuel can be recirculated in feedback arrangement 109 through each anode. SOFC device in fig 2 also comprises fuel heat exchanger 105 and reformer 107. Typically several heat exchangers are used for controlling thermal conditions at different locations in a fuel cell process. Reformer 107 is a device that converts the fuel such as for example natural gas to a composition suitable for fuel cells, for example to a composition containing hydrogen and methane, carbon dioxide, carbon monoxide and inert gases. Anyway in each SOFC device it Is though not necessary to have a reformer.

For example inert gases are purge gases or part of purge gas compounds used in fuel cell technology. For example nitrogen is a typical inert gas used as purge gas in fuel cell technology. Purge gases are not necessarily elemental and they can be also compound gases.

By using measurement means 115 (such as fuel flow meter, current meter and temperature meter) necessary measurements are carried out for the operation of the SOFC device. Part of the gas used at anodes 100 may be recirculated through anodes in feedback arrangement 109 and the other part of the gas is exhausted 114 from the anodes 100.

A solid oxide fuel cell (SOFC) device Is an electrochemical conversion device that produces electricity directly from oxidizing fuel. Advantages of SOFC device include high efficiencies, long term stability, low emissions, and cost. The main disadvantage is the high operating temperature which results in long start up times and both mechanical and chemical compatibility issues.

The anode electrode of solid oxide fuel cell (SOFC) typically contains significant amounts of nickel that is vulnerable to form nickel oxide if the atmosphere Is not reducing. If nickel oxide formation Is severe, the morphology of electrode Is changed irreversibly causing significant loss of electrochemical activity or even break down of cells. Hence, SOFC systems require purge gas, i.e. safety gas, containing reductive agents (such as hydrogen diluted with Inert such as nitrogen) during the start-up and shut-down in order to prevent the fuel cell's anode electrodes from oxidation. In practical systems the amount of purge gas has to be minimized because an extensive amount of, e.g. pressurized gas containing hydrogen, are expensive and problematic as space-requiring components.

According to prior art applications the amount of purge gases during normal start-up or shut-down is minimized by anode recirculation, i.e. circulating the non-used purge gases back to the loop, as there Is simultaneous need for minimization of the purge gases and heating in the start-up situation and also simultaneous need for minimization of the purge gases and cooling of the system in the shut-down situation. However, in emergency shut-down (ESD) that may be caused e.g. by gas alarm or black-out, and there won't be active recirculation available increasing the amount of needed purge gas. In addition, the cathode air flow is not cooling the system during the ESD, because the air blower has to be shut down, and hence the amount of needed purge gas is even more increased as the time to cool the system down to temperatures where nickel oxidation does not happen Is even three-fold compared to active shut-down situation.

As described, current SOFC stacks require reducing purge gas to protect the anode from oxidation during abnormal situations, like emergency shutdowns. However, still the amount of purge gas is considerable for real field application, especially with larger unit sizes. Stacks are vulnerable towards detrimental nickel oxidation above a certain critical temperature, which lies typically somewhere between 300-400 degrees Celsius. Below this temperature, nickel oxidation reaction is so slow that there Is no more need for reductive atmosphere on the anode. In passive emergency shutdown (ESD) situations, the cooling of the unit Is extremely slow (even up to 10 hours or more) due to non-existing air flow through the system, high heat capacitance of the components, and good thermal insulation of the system. Even if active air cooling could be utilized, the cooling is slow because of high efficiency recuperator bringing most of the heat back to the system.

For example in patent application document JP 2009 170307 A is concentrated on active operation embodiment, i.e. on active controlling of the fuel system by using a pump, etc. A person skilled in the art well knows that such active embodiments suffer from defective operability especially in the emergency shutdown situations.

### Short description of the invention

The object of the invention Is to accomplish a fuel cell system where the risk of anode oxidation in shut-down situations is significantly reduced. This is achieved by a high temperature fuel cell system comprising a cooling arrangement for substantially reducing the amount of purge gas in a system emergency shutdown situation or similar, each fuel cell in the fuel cell system comprising an anode side, a cathode side, and an electrolyte between the anode side and the cathode side, the fuel cell system comprising the fuel cells in fuel cell stacks, and the cooling arrangement comprises a coolant source capable of providing coolant to be used In a cooling process of the high temperature fuel cell system during the system shutdown situation, a cooling structure in connection to the coolant source and arranged in a thermal effect area of the fuel cell stacks for receiving heat from the fuel cell stacks at least by radiation and transferring received heat to the coolant, means for feeding said coolant into the cooling structure from the coolant source, means for exhausting used coolant from the cooling structure, and means for utilizing a triggering force to trigger a coolant flow In the cooling structure, when the system shutdown situation has started. The cooling arrangement comprises as the means a separate tank arrangement to utilize pressurized gas as a driving force for feeding the coolant to the cooling structure, and means for dimensioning the flow rate of coolant according to the required cooling duty and allowed cooling rate of the fuel cell stacks by utilizing a triggering force to perform passive self actuation type operation.

The focus of the invention is also a method for substantially reducing the amount of purge gas in a system emergency shutdown situation or similar in a high temperature fuel cell system, in which fuel cells have been arranged In fuel cell stacks, and In the method a coolant Is utilized in a cooling process of the high temperature fuel cell system during the system shutdown situation by feeding said coolant to a cooling structure, which has been arranged in a thermal effect area of the fuel cell stacks for receiving heat from the fuel cell stacks at least by radiation and transferring received heat to the coolant, and the coolant flow, which is fed into the cooling structure, is triggered into the cooling structure, when the system shutdown situation has started, and used coolant is exhausted from the cooling structure. Said feeding of the coolant is performed from a separate tank arrangement by utilizing pressurized gas as a driving force for feeding the coolant to the cooling structure, and the flow rate of coolant has been dimensioned according to the required cooling duty and allowed cooling rate of the fuel cell stacks by utilizing passive self actuation type operation accomplished by said triggering.

The invention is based on the utilization of coolant, which has essentially high heat capacity characteristics, and the flowing arrangement of said coolant essentially nearby the hot fuel cell stacks. By this way enhancing the cooling rate of the high temperature fuel cell systems, especially during ESD (Emergency Shut-Down) situations, the amount of required purge gas Is significantly reduced in cooling processes of the high temperature fuel cell systems.

The benefit of the invention Is that the risk of anode oxidation in system shut down situations is significantly reduced and lifetime of the fuel cell system is increased in a cost effective manner. Also a substantial amount of energy production time is spared because of the faster cooling process.

### Short description of figures

- Figure 1: presents a single fuel cell structure.
- Figure 2: presents an example of a SOFC device.
- Figure 3: presents a cooling arrangement for high temperature fuel cell system according to the present Invention.
- Figure 4: presents a preferred embodiment according to the present Invention.

### Detailed description of the invention

Solid oxide fuel cells (SOFCs) can have multiple geometries. The planar geometry (Fig 1) is the typical sandwich type geometry employed by most types of fuel cells, where the electrolyte 104 is sandwiched in between the electrodes, anode 100 and cathode 102. SOFCs can also be made In tubular geometries where for example either air or fuel is passed through the inside of the tube and the other gas is passed along the outside of the tube. This can be also arranged so that the gas used as fuel is passed through the inside of the tube and air is passed along the outside of the tube. Other geometries of SOFCs include modified planar cells (MPC or MPSOFC), where a wave-like structure replaces the traditional flat configuration of the planar cell. Such designs are promising, because they share the advantages of both planar cells (low resistance) and tubular cells.

The ceramics used in SOFCs do not become ionically active until they reach a very high temperature and as a consequence of this the stacks have to be heated at temperatures ranging from 600 to 1,000 °C. Reduction of oxygen 106 (Fig. 1) into oxygen ions occurs at the cathode 102. These ions can then be transferred through the solid oxide electrolyte 104 to the anode 100 where they can electrochemically oxidize the gas used as fuel 108. In this reaction, water and carbon dioxide byproducts are given off as well as two electrons. These electrons then flow through an external circuit 111 where they can be utilized. The cycle then repeats as those electrons enter the cathode material 102 again.

In large solid oxide fuel cell systems typical fuels are natural gas (mainly methane), different blogases (mainly nitrogen and/or carbon dioxide diluted methane), and other higher hydrocarbon containing fuels, including alcohols. Methane and higher hydrocarbons need to be reformed either in the reformer 107 (Fig 2) before entering the fuel cell stacks 103 or (partially) internally within the stacks 103. The reforming reactions require certain amount of water, and additional water is also needed to prevent possible carbon formation (coking) caused by higher hydrocarbons. This water can be provided Internally by circulating the anode gas exhaust flow, because water is produced in excess amounts In fuel cell reactions, and/or said water can be provided with an auxiliary water feed (e.g. direct fresh water feed or circulation of exhaust condensate). By anode recirculation arrangement also part of the unused fuel and dilutants in anode gas are fed back to the process, whereas in auxiliary water feed arrangement only additive to the process is water. Because anode electrode of a solid oxide fuel cell typically consists of a porous, nickel matrix ceramic-metallic structure which morphology is critical for cell performance, oxidation of nickel may change the fuel cells performance Irreversibly. This is why SOFC systems require purge gas containing reductive agents, such as hydrogen diluted with inert such as nitrogen, in order to prevent anode electrodes of the fuel cell system from oxidation. In practical fuel cell systems it is uneconomical to maintain an excessive purge gas storage, i.e. the amount of safety gas should be minimized. Also a pressurization arrangement, which is needed for the use of purge gas, has a significant effect on the physical size of the fuel cell system.

To minimize the need to use purge gas in embodiments according to the present invention is rapidly absorbed heat from the stacks 103 and surroundings by utilizing passive absorption means. By this way temperature level of the stacks can be brought to a level where purge gases are not anymore required, at least not in significant quantities. This can be achieved e.g. by feeding water, or some other medium that has high heat capacity and/or high latent heat of phase change, into the hot compartment of the system after ESD, and hence absorbing the heat by heating and evaporating the water. The water could e.g. be fed into a dedicated structure where it is let to flow through a pre-fixed restriction from a tank above the hot compartment by utilizing gravitation force. A simple cooling structure can be arranged for example by a pipe structure directed to flow coolant from the tank above the hot fuel cell stack compartments down beside the hot compartments, and the same pipe structure can also exhaust below the fuel cell stack compartments used coolant by utilizing gravitation force. The effective steam generation in the pipe structure beside the hot compartments prevents speed of flowing coolant to a certain speed level.

The high temperature of the hot fuel cell stack compartments heat and evaporate the water, especially at higher temperatures in the beginning of the cooling process, by radiative heat transfer, and hence the removal of heat from the hot structures is effective. The water flow rate could be restricted in a way that the cooling does not cause too high thermal gradients within the system. In the structure where the water is fed, there could be a pressure relief valve (or similar setup) to prevent hazardous pressure accumulation of the evaporated water. The bleeding from relief valve could be directed safety into e.g. exhaust pipe of the system, which could be drained after ESD as there will be condensed water after cooling.

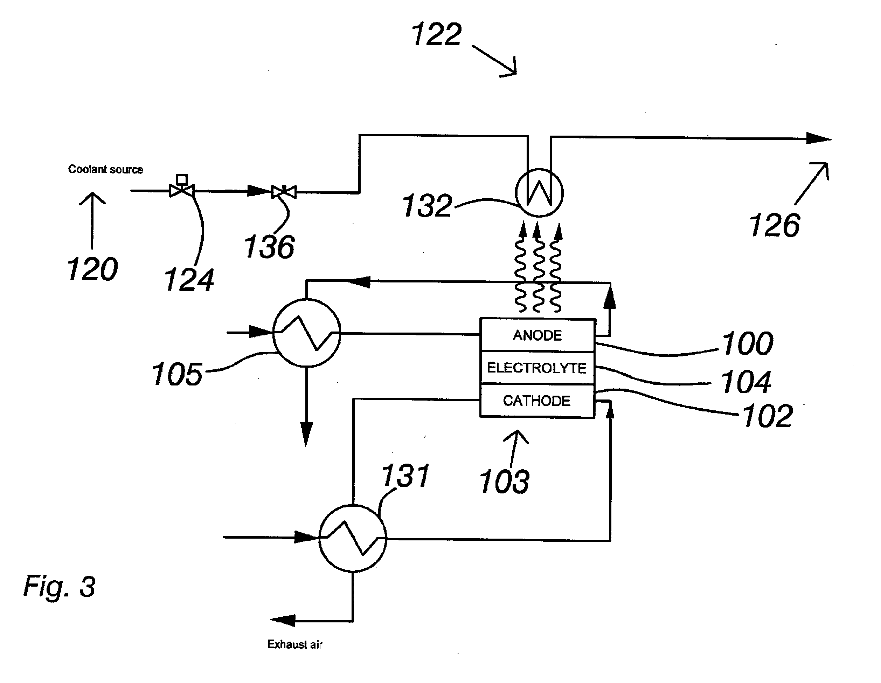

In figure 3 is presented a simplified cooling arrangement for high temperature fuel cell system according to the present invention to present main parts needed in the utilization of the invention. The cooling arrangement comprises a coolant source 120 capable of providing coolant to be used In a cooling process of the high temperature fuel cell system during a system shutdown situation. Water or some other liquid suitable for cooling purposes Is used as a coolant, and the source 120 is for example a water inlet from water pipe network or a tank arrangement containing water (or other coolant) or which ever source providing coolant to the cooling arrangement. A cooling structure 122 Is In connection to the coolant source 120 and has been arranged essentially in a thermal effect area of the fuel cell stacks 103 for receiving heat from the fuel cell stacks at least by radiation and transferring received heat to the coolant. Along said connection between the coolant source 120 and the cooling structure 122 are means 124 for feeding said coolant into the cooling structure 122 from the coolant source 120. Said means 124, can be accomplished for example by a valve arrangement. The cooling arrangement also comprises means 126 for exhausting used coolant from the cooling structure 122. The most simplified example of means 126 are for example just a pipe, which exhausts the flow of used coolant from the cooling structure 122.

When the system shutdown situation of the fuel cell system starts, the cooling arrangement shut-down triggers flow of coolant to the cooling structure by means 136 at a flow rate limited by said means 136 for utilizing a triggering force to trigger a coolant flow in the cooling structure 122. Means 136 are accomplished for example by utilizing a spring valve or a pressurization arrangement to perform for example passive self actuation type operation in said triggering. The operation of the cooling structure 122 may be Integrated with the operation of the fuel heat exchanger 105 In the anode sides of the stacks 103. In figure 3 is also presented a possibility that some gas, for example nitrogen, flows in the cathode sides 102 in the shutdown situation, and thus figure 3 also presents an gas heat exchanger 131 and exhaust outlet of gas used in cooling process in the cathode sides 102 of the stacks 103.

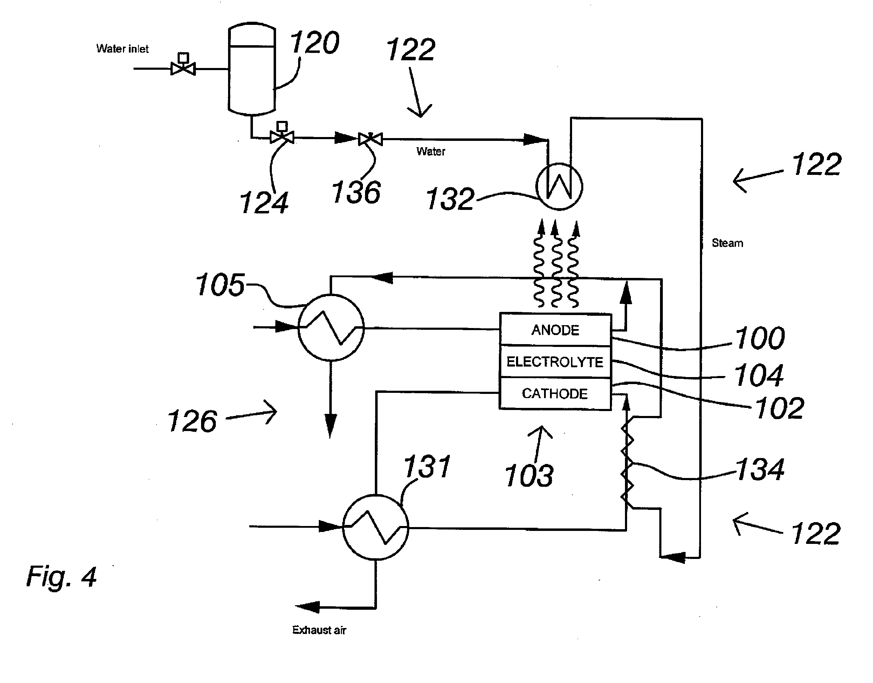

In figure 4 Is presented a preferred embodiment according to the invention for substantially reducing the amount of purge gas in a system shut down situation of high temperature fuel cell system. This is achieved by a cooling arrangement comprising a coolant source 120, which contains preferably water as coolant. In this preferred embodiment the coolant source Is located above fuel cell stacks 103, and gravitation force is utilized by a restriction function part 136 to let a restricted flow of coolant in accordance to a predetermined coolant flow rate to flow down In a cooling structure 122 essentially nearby the fuel cell stacks by utilizing gravitation force. Thus the restriction function part is also one example of said means 136 for utilizing a triggering force. In most cases the system shutdown situation is an ESD (Emergency Shut-Down) situation. The cooling structure 122 is in connection to the coolant source 120 and arranged essentially In a thermal effect area of the fuel cell stacks 103 for receiving heat from the fuel cell stacks at least by radiation and transferring received heat to the coolant, i.e. water, inside the cooling structure 122. In said transferring of heat from the stacks to water, i.e. in fuel cell stacks cooling process, is utilized phase transition of water to steam.

The preferred cooling arrangement in figure 4 further comprises means 124 for feeding said coolant from the coolant source 120 into the cooling structure 122. There are several alternatives for said means 124. For example means 124 can be arranged by using a separate tank arrangement 124. In the operation of said separate tank arrangement 124 can be utilized a pressurization arrangement to feed water from the coolant source 120 into the cooling structure 122. Said means 124 can also be for example a membrane expansion vessel 124, which utilizes pressurized gas in performing pressurized action to feed coolant from the vessel 124 into the cooling structure 122.

When the ESD (Emergency Shut-Down) situation has started, the coolant flow, which is fed into the cooling structure 122 by the means 124, is also triggered at a predetermined rate to the cooling structure by means 136 for utilizing a triggering force. Means 136 can be capable of performing passive self actuation type operation. Said means 136 for utilizing a triggering force to trigger a coolant flow In the cooling structure can also be so arranged that passive operation accomplished by said triggering is performed by utilizing a pressure reserve existing in the cooling arrangement. Said means 136 can also be capable of dimensioning the flow rate of coolant according to the required cooling duty and allowed cooling rate of the fuel cell stacks 103 so that the coolant flow Is triggered at a predetermined flow rate to the cooling structure 122 by the means 136.

In the preferred embodiment of the invention heat radiation absorption efficiency of the cooling structure 122 is enhanced by using platy structure parts in the cooling structure for the coolant to maximise heat radiation absorption area of the cooling structure. These platy structure parts can be arranged for example to a heat radiation exchanger 132, which is a cooling unit in the cooling structure 122 specialized to absorb especially heat radiation from the fuel cell stacks 103 and to transfer absorbed heat to coolant i.e. water flowing In the cooling structure 122.

Furthermore to grow cooling efficiency of the cooling arrangement, the cooling structure 122 comprises a sheath structure 134 to absorb heat from the fuel cell stacks 103 for cooling at least one of the anode side 100 and cathode side 102 of the fuel cell system. Said absorbed heat is further transferred through the sheath structure 134 to the coolant. In figure 4 is presented the sheath structure 134 only in the cathode sides 100 of the fuel cell stacks 103, but as said, the sheath structure can also be utilized in the cooling of the fuel cell stacks 103 in the anode sides 102 of the stacks 103. The operation of the cooling structure 122 is preferably, but not necessarily, integrated with the operation of the fuel heat exchanger 105 in the anode sides of the stacks 103.

The preferred cooling arrangement (figure 4) can also comprise means 126 for injecting used coolant to reactant exhaust piping to utilize used coolant in operation of other parts of the fuel cell system. In the cooling structure 122 and in relevant parts, such as sheath structure 134 and heat radiation exchanger 132 is used suitable metal material or some other material, which tolerates very high temperatures for even up to 1000 degrees of and Celsius and more.

Although the invention has been presented in reference to the attached figures and specification, the Invention is by no means limited to those as the invention is subject to variations within the scope allowed for by the claims.

## Claims

1. A high temperature fuel cell system comprising a cooling arrangement for substantially reducing the amount of purge gas In a system emergency shutdown situation or similar, each fuel cell in the fuel cell system comprising an anode side (100), a cathode side (102), and an electrolyte (104) between the anode side and the cathode side, the fuel cell system comprising the fuel cells in fuel cell stacks (103), and the cooling arrangement comprises:
- a coolant source (120) capable of providing coolant to be used in a cooling process of the high temperature fuel cell system during the system shutdown situation,
- a cooling structure (122) in connection to the coolant source (120) and arranged In a thermal effect area of the fuel cell stacks (103) for receiving heat from the fuel cell stacks at least by radiation and transferring received heat to the coolant,
- means (124) for feeding said coolant into the cooling structure (122) from the coolant source (120),
- means (126) for exhausting used coolant from the cooling structure,
- and means (136) for utilizing a triggering force to trigger a coolant flow in the cooling structure, when the system shutdown situation has started,
**characterized by**, that the cooling arrangement comprises as the means (124) a separate tank arrangement (124) to utilize pressurized gas as a driving force for feeding the coolant to the cooling structure (122), and means (136) for dimensioning the flow rate of coolant according to the required cooling duty and allowed cooling rate of the fuel cell stacks (103) by utilizing a triggering force to perform passive self actuation type operation.

2. A high temperature fuel cell system comprising a cooling arrangement in accordance with claim 1, **characterized by**, that the cooling arrangement comprises water as said coolant to receive heat from the fuel cell system, and to utilize phase transition of water to steam in the cooling process.

3. A high temperature fuel cell system comprising a cooling arrangement in accordance with claim 1, **characterized by**, that the cooling structure (122) comprises platy structure parts for the coolant to enhance heat radiation absorption efficiency of the cooling structure.

4. A high temperature fuel cell system comprising a cooling arrangement in accordance with claim 1, **characterized by**, that the cooling structure (122) comprises a sheath structure (134) to absorb heat from the fuel cell stacks (103) by utilizing said coolant for cooling at least one of the anode side (100) and cathode side (102) of the fuel cell system.

5. A method for substantially reducing the amount of purge gas in a system emergency shutdown situation or similar in a high temperature fuel cell system, in which fuel cells have been arranged in fuel cell stacks (103), and in the method a coolant is utilized in a cooling process of the high temperature fuel cell system during the system shutdown situation by feeding said coolant to a cooling structure (122), which has been arranged in a thermal effect area of the fuel cell stacks (103) for receiving heat from the fuel cell stacks at least by radiation and transferring received heat to the coolant, and the coolant flow, which is fed into the cooling structure (122), is triggered into the cooling structure, when the system shutdown situation has started, and used coolant Is exhausted from the cooling structure (122), **characterized, by** that said feeding of the coolant is performed from a separate tank arrangement (124) by utilizing pressurized gas as a driving force for feeding the coolant to the cooling structure (122), and the flow rate of coolant has been dimensioned according to the required cooling duty and allowed cooling rate of the fuel cell stacks (103) by utilizing passive self actuation type operation accomplished by said triggering.

6. A method In accordance with claim 5, **characterized by**, that as said coolant is used water to receive heat from the fuel cell system, and to utilize phase transition of water to steam in the cooling process.

7. A method In accordance with claim 5, **characterized by**, that heat radiation absorption efficiency of the cooling structure (122) is enhanced by using platy structure parts in the cooling structure for the coolant.

8. A method in accordance with claim 5, **characterized by**, that a sheath structure (134) is utilized to absorb heat from the fuel cell stacks (103) by utilizing coolant in said sheath structure for cooling at least one of an anode side (100) and a cathode side (102) of the fuel cell system.

## Patentansprüche

1. Eine Hochtemperatur-Brennstoffzellensystem, das eine Kühlungsanordnung umfasst, um die Menge von Spülgas in einer Systemnotabschaltungssituation oder ähnlich erheblich zu verringern, wobei jede Brennstoffzelle in dem Brennstoffzellensystem eine Anodenseite (100), eine Kathodenseite (102), und einen Elektrolyt (104) zwischen der Anodenseite und der Kathodenseite umfasst, wobei das Brennstoffzellensystem die Brennstoffzellen in Brennstoffzellenstapeln (103) umfasst, und die Kühlungsanordnung umfasst:
- eine Kühlmittelquelle (120), die fähig ist, ein Kühlmittel bereitzustellen, das in einem Kühlungsprozess des Hochtemperatur-Brennstoffzellensystems während der Systemabschaltsituation genutzt werden soll,
- eine Kühlungsstruktur (122) verbunden mit einer Kühlmittelquelle (120) und angeordnet in einem thermischen Wirkungsbereich der Brennstoffzellenstapel (103), um Wärme von den Brennstoffzellenstapeln zumindest durch Abstrahlung zu empfangen und um die empfangene Wärme an das Kühlmittel weiterzugeben,
- Mittel (124), um das besagte Kühlmittel zur Kühlungsstruktur (122) von der Kühlmittelquelle (120) zuzuführen,
- Mittel (126), um benutztes Kühlmittel aus der Kühlungsstruktur abzugeben,
- und Mittel (136) um eine Auslösekraft zu benutzen, um einen Kühlmittelfluss in der Kühlungsstruktur auszulösen, wenn die Systemabschaltsituation begonnen hat,
**dadurch gekennzeichnet, dass** die Kühlungsanordnung als Mittel (124) eine separate Tankanordnung (124) umfasst, um unter Druck befindliches Gas als treibende Kraft zu benutzen, um das Kühlmittel zur Kühlungsstruktur (122) zuzuführen, und Mittel (136) um die Durchflussrate des Kühlmittels entsprechend der benötigten Kühlungsleistung und der erlaubten Abkühlungsgeschwindigkeit der Brennstoffzellenstapel (103) zu dimensionieren, indem eine Auslösekraft benutzt wird, um eine Art passiven Selbstbetätigungsarbeitsvorgang auszuführen.

2. Ein Hochtemperatur-Brennstoffzellensystem mit einer Kühlungsanordnung nach Patentanspruch 1, **dadurch gekennzeichnet, dass** die Kühlungsanordnung Wasser als besagtes Kühlmittel umfasst um Wärme von dem Brennstoffzellensystem zu empfangen, und um Phasenänderung von Wasser zu Dampf in dem Kühlungsprozess zu nutzen.

3. Ein Hochtemperatur-Brennstoffzellensystem mit einer Kühlungsanordnung nach Patentanspruch 1, **dadurch gekennzeichnet, dass** die Kühlungsstruktur (122) flache Strukturteile für das Kühlmittel umfasst, um Wärmeabstrahlungsabsorbierungseffizienz der Kühlungsstruktur zu erhöhen.

4. Ein Hochtemperatur-Brennstoffzellensystem mit einer Kühlungsanordnung nach Patentanspruch 1, **dadurch gekennzeichnet, dass** die Kühlungsstruktur (122) eine Schalungsstruktur (134) umfasst, um Wärme von den Brennstoffzellenstapeln (103) zu absorbieren, indem das besagte Kühlmittel benutzt wird, um wenigstens eine der Anodenseite (100) und der Kathodenseite (102) des Brennstoffzellensystems zu kühlen.

5. Ein Verfahren, um die Menge von Spülgas in einer Systemnotabschaltungssituation oder ähnlich in einem Hochtemperatur-Brennstoffzellensystem, in dem Brennstoffzellen in Brennstoffzellenstapel (103) angeordnet sind, erheblich zu verringern, und in dem Verfahren wird ein Kühlmittel in einem Kühlungsprozess des Hochtemperatur-Brennstoffzellensystems während einer Systemabschaltungssituation benutzt, indem besagtes Kühlmittel einer Kühlungsstruktur (122) zugeführt wird, die in einem thermischen Wirkungsbereich der Brennstoffzellenstapel (103) angeordnet ist um Wärme von den Brennstoffzellenstapeln zumindest durch Abstrahlung zu empfangen und um empfangene Wärme an das Kühlmittel übermitteln, und der Kühlmittelfluss, der in die Kühlungsstruktur (122) eingeführt wird, wird ausgelöst in die Kühlungsstruktur, wenn die Systemabschaltungssituation begonnen hat, und benutztes Kühlmittel wird aus der Kühlungsstruktur (122) ausgepufft, **gekennzeichnet dadurch, dass** das besagte zuführen des Kühlmittels ausgeführt wird von einer separaten Tankanordnung (124) indem unter Druck stehendes Gas als treibende Kraft benutzt wird, um das Kühlmittel der Kühlungsstruktur (122) zuzuführen, und die Durchflussrate des Kühlmittels ist dimensioniert worden entsprechend der benötigten Kühlungsleistung und der erlaubten Abkühlungsgeschwindigkeit der Brennstoffzellenstapel (103), indem eine Art passiver Selbstbetätigungsarbeitsvorgang genutzt wird, der durch die erwähnte Auslösung erreicht wurde.

6. Ein Verfahren nach Patentanspruch 5, **gekennzeichnet dadurch, dass** als besagtes Kühlmittel Wasser benutzt wird, um Wärme von dem Brennstoffzellensystem zu empfangen, und um Phasenänderung von Wasser zu Dampf im Kühlungsprozess zu nutzen.

7. Ein Verfahren nach Patentanspruch 5, **gekennzeichnet dadurch, dass** die Wärmeabstrahlungsabsorbierungseffizienz der Kühlungsstruktur (122) verbessert wird, indem flache Strukturteile in der Kühlungsstruktur für das Kühlmittel benutzt werden.

8. Ein Verfahren nach Patentanspruch 5, **gekennzeichnet dadurch, dass** eine Schalungsstruktur (134) benutzt wird, um Wärme von den Brennstoffzellenstapel (103) zu absorbieren, indem Kühlmittel in besagter Schalungsstruktur benutzt wird, um wenigstens eine einer Anodenseite (100) und einer Kathodenseite (102) des Brennstoffzellensystems zu kühlen.

## Revendications

1. Système de piles à combustible à haute température comprenant un agencement de refroidissement pour sensiblement réduire la quantité de gaz de purge dans une situation d'arrêt d'urgence du système ou similaire, chaque pile à combustible du système de piles à combustible comprenant un côté anodique (100), un côté cathodique (102) et un électrolyte (104) entre le côté anodique et le côté cathodique, le système de piles à combustible comprenant les piles à combustibles dans des blocs de piles à combustible (103), et l'agencement de refroidissement comprenant :
- une source d'agent de refroidissement (120) capable de fournir un agent de refroidissement à utiliser lors d'un processus de refroidissement du système de piles à combustible à haute température pendant la situation d'arrêt du système,
- une structure de refroidissement (122) en connexion avec la source d'agent de refroidissement (120) et disposée dans une zone à effet thermique des blocs de piles à combustible (103) pour recevoir de la chaleur des blocs de piles à combustible au moins par radiation et pour transférer la chaleur reçue à l'agent de refroidissement,
- un moyen (124) pour alimenter la structure de refroidissement (122) avec ledit agent de refroidissement de la source d'agent de refroidissement (120),
- un moyen (126) pour évacuer l'agent de refroidissement usagé de la structure de refroidissement,
- et un moyen (136) pour utiliser une force de déclenchement afin de déclencher un flux d'agent de refroidissement dans la structure de refroidissement lorsque la situation d'arrêt du système a débutée,
**caractérisé en ce que** l'agencement de refroidissement comprend, en tant que moyen (124), un agencement de réservoir distinct (124) pour utiliser du gaz pressurisé en tant que force de commande afin d'alimenter la structure de refroidissement (122) avec l'agent de refroidissement, et un moyen (136) pour dimensionner le débit de l'agent de refroidissement en fonction du facteur de refroidissement requis et de la vitesse de refroidissement autorisée du bloc de piles à combustible (103) en utilisant une force de déclenchement afin de réaliser une opération de type auto-actionnement passif.

2. Système de piles à combustible à haute température comprenant un agencement de refroidissement selon la revendication 1, **caractérisé en ce que** l'agencement de refroidissement comprend de l'eau en tant que ledit agent de refroidissement afin de recevoir la chaleur du système de piles à combustibles, et afin d'utiliser une transition de phase d'eau en vapeur lors du processus de refroidissement.

3. Système de piles à combustible à haute température comprenant un agencement de refroidissement selon la revendication 1, **caractérisé en ce que** la structure de refroidissement (122) comprend des éléments structurels lamellaires afin que l'agent de refroidissement améliore l'efficacité d'absorption du rayonnement thermique de la structure de refroidissement.

4. Système de piles à combustible à haute température comprenant un agencement de refroidissement selon la revendication 1, **caractérisé en ce que** la structure de refroidissement (122) comprend une structure de gaine (134) pour absorber la chaleur des blocs de piles à combustible (103) en utilisant ledit agent de refroidissement pour refroidir au moins l'un d'entre le côté anodique (100) et le côté cathodique (102) du système de piles à combustible.

5. Procédé pour sensiblement réduire la quantité de gaz de purge dans une situation d'arrêt d'urgence du système ou similaire dans un système de piles à combustible à haute température, dans lequel des piles à combustible ont été disposées dans des blocs de piles à combustible (103), et dans le procédé, un agent de refroidissement étant utilisé lors d'un processus de refroidissement du système de piles à combustible à haute température pendant la situation d'arrêt du système en alimentant une structure de refroidissement (122) avec ledit agent de refroidissement, laquelle structure a été disposée dans une zone à effet thermique des blocs de piles à combustible (103) pour recevoir de la chaleur des blocs de piles à combustible au moins grâce au rayonnement et pour transférer la chaleur reçue à l'agent de refroidissement, et le flux d'agent de refroidissement, lequel est fourni à l'intérieur de la structure de refroidissement (122), étant déclenché vers l'intérieur de la structure de refroidissement lorsque la situation d'arrêt du système a débutée, et l'agent de refroidissement usagé étant évacué de la structure de refroidissement (122), **caractérisé en ce que** ladite alimentation en agent de refroidissement est réalisée à partir d'un agencement de réservoir distinct (124) en utilisant du gaz pressurisé en tant que force de commande pour alimenter la structure de refroidissement (122) avec l'agent de refroidissement, et le débit de l'agent de refroidissement ayant été dimensionné en fonction du facteur de refroidissement requis et de la vitesse de refroidissement autorisée des blocs de piles à combustible (103) en utilisant une opération de type auto-actionnement passif accomplie grâce audit déclenchement.

6. Procédé selon la revendication 5, **caractérisé en ce que** l'on utilise de l'eau en tant que ledit agent de refroidissement pour recevoir de la chaleur du système de piles à combustible, et pour utiliser une transition de phase d'eau en vapeur lors du processus de refroidissement.

7. Procédé selon la revendication 5, **caractérisé en ce que** l'efficacité d'absorption du rayonnement thermique de la structure de refroidissement (122) est améliorée en utilisant des éléments structurels lamellaires dans la structure de refroidissement pour l'agent de refroidissement.

8. Procédé selon la revendication 5, **caractérisé en ce qu'**une structure de gaine (134) est utilisée pour absorber la chaleur des blocs de piles à combustibles (103) en utilisant un agent de refroidissement dans ladite structure de gaine pour le refroidissement d'au moins l'un parmi un côté anodique (100) et un côté cathodique (102) du système de piles à combustibles.
